(19) Europäisches Patentamt
European Patent Office
Office européen des brevets

(11) EP 0 770 725 A2

(12) **EUROPEAN PATENT APPLICATION**

(43) Date of publication:
**02.05.1997 Bulletin 1997/18**

(51) Int Cl.[6]: **D06M 15/643**, C08G 77/38, C08G 77/14

(21) Application number: **96307016.4**

(22) Date of filing: **26.09.1996**

(84) Designated Contracting States:
**DE ES FR GB IT**

(30) Priority: **29.09.1995 JP 276246/95**

(71) Applicant: **Dow Corning Toray Silicone Company Limited**
**Tokyo (JP)**

(72) Inventors:
- **Ishikawa, Hiroki, c/o Dow Corning Toray Ichihara-Shi, Chiba Prefecture (JP)**
- **Naganawa, Tsutomu, c/o Dow Corning Toray Ichihara-Shi, Chiba Prefecture (JP)**
- **Ona, Isao, c/o Dow Corning Toray Ichihara-Shi, Chiba Prefecture (JP)**

(74) Representative: **Kyle, Diana**
**Elkington and Fife**
**Prospect House**
**8 Pembroke Road**
**Sevenoaks, Kent TN13 1XR (GB)**

(54) **Diorganopolysiloxanes adapted for textile treatment**

(57) Diorganopolysiloxanes that are useful for treating woven and non woven textiles and fibers are disclosed. The novel diorganopolysiloxanes of the invention have one or more organic groups containing epoxy groups and organic groups containing carboxyl groups in 1 molecule and which have a viscosity at 25°C of 10 to 1,000,000 centistokes . The diorganopolysiloxanes of the invention are indicated by the general formula:

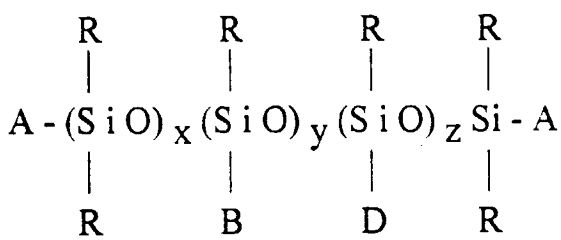

wherein, R, is a monovalent hydrocarbon group, which R groups may be the same or different, B is an organic group containing an epoxy group, D is an organic group containing a carboxyl group, A is a group selected from a group consisting of R, B and D, x is a positive number, y is 0 or a positive number and z is 0 or a positive number.

EP 0 770 725 A2

## Description

The present invention relates to novel diorganopolysiloxanes adapted for use as cloth treatment agents.

Organopolysiloxanes containing epoxy groups and organopolysiloxanes containing carboxyl groups are widely used as fiber treatment agents. For example, fiber treatment agents comprising organopolysiloxanes containing epoxy groups and acrylamide resins in Japanese Patent Publication (KOKAI) 60-94680 [1985], fiber treatment agents comprising microemulsions of organopolysiloxanes containing carboxyl groups in Japanese Patent Publication 63-270875 [1988], fiber treatment agents comprising organopolysiloxanes containing carboxyl groups and organopolysiloxanes containing amino groups in Japanese Patent Publication 55-152864 [1980], fiber treatment agents comprising organopolysiloxanes containing epoxy groups and organopolysiloxanes containing amino groups in Japanese Patent Publication 48-17514 [1973] and fiber treatment agents obtained by adding silanes containing amino groups to organopolysiloxanes containing epoxy groups, organopolysiloxanes containing carboxyl groups and organopolysiloxanes containing amino groups in Japanese Patent Publication 5-156169 [1993]. However, these fiber treatment agents do not impart a satisfactory feel and that they are shed comparatively easily by washing. In addition, an insect-proofing material in which a treatment agent comprised of an organopolysiloxane containing an epoxy group, an organopolysiloxane containing a carboxyl group and an insect-proofing agent is used and in which these two types of siloxanes are subjected to a cross-linking reaction for the purpose of preventing shedding of the insect-proofing agent by washing in Japanese Patent Publication No. 63-264506 [1988]. However. the feel imparted by the compositions is not adequate.

An object of the present invention is to provide a novel diorganopolysiloxane containing one or more organic groups containing an epoxy group and an organic group containing a carboxyl group in one molecule and a cloth treatment agent comprised of this siloxane.

In accordance with the present invention. there is provided a cloth treatment agent comprising a diorganopolysiloxane which has one or more organic groups containing epoxy groups and organic groups containing carboxyl groups in 1 molecule and which has a viscosity at 25°C of 10 to 1,000,000 centistokes, the diorganopolysiloxane having the general formula:

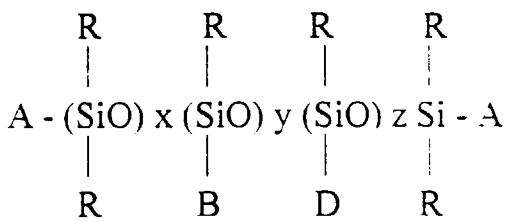

wherein:

R is a monovalent hydrocarbon group which R may be the same or different:
B is an organic group containing an epoxy group selected from:

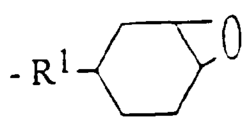

wherein. $R^1$ is a diavalent hydrocarbon group and

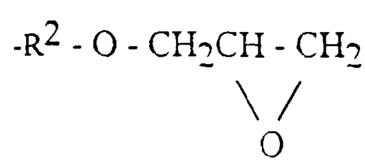

wherein, $R^2$ is a divalent hydrocarbon group;

D is an organic group containing a carboxyl group as indicated by the formula: $-R^3\text{-}COOR^4$, wherein, $R^3$ is a divalent hydrocarbon group and $R^4$ is selected from hydrogen. monovalent hydrocarbon groups and the $-SiR_3$ groups, wherein, R is as defined above;

A is a group selected from R. B and D. and
x is a positive number; y is 0 or a positive number and z is 0 or a positive number.

The diorganopolysiloxanes of the invention are indicated by the general formula described above. In the formula R indicates monovalent hydrocarbon groups which may be the same or different, and, specifically, alkyl groups such as methyl groups, ethyl groups, propyl groups and octyl groups, substituted alkyl groups such as 2-phenylethyl groups, 2-phenylpropyl groups and 3,3,3-tolufluoropropyl groups; and aryl groups or substituted aryl groups such as phenyl groups and tolyl groups. Of these, methyl groups are preferable.

B is an organic group containing an epoxy group selected from:

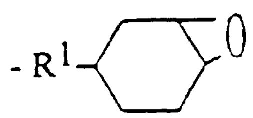

and

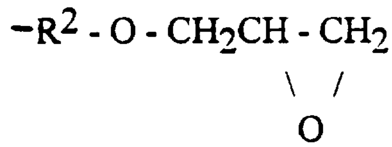

wherein $R^1$ and $R^2$ are divalent hydrocarbon groups such as ethylene groups, n-propylene groups, isopropylene groups and n-butylene groups. This group containing an epoxy group indicated by the formula:

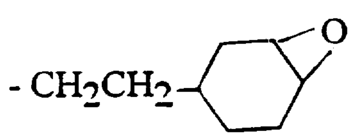

and a group as indicated by the formula:

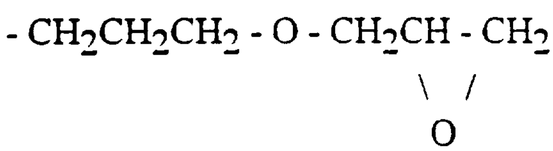

D is an organic group that contains a carboxyl group as indicated by the formula: $-R^3\text{-}COOR^4$. $R^3$ is a divalent hydrocarbon group such as an alkylene group such as an ethylene group. an n-propylene group or an n-butylene group or an alkylene arylene group as indicated by the formula: $-(CH_2)_2\text{-}C_6H_4\text{-}$. $R^4$ is a monovalent group selected from hydrogen, monovalent hydrocarbon groups, and a silyl group as indicated by the formula: $-SiR_3$ (wherein R is a monovalent hydrocarbon group which R groups may be the same or different). R may be an alkyl group such as a methyl group, an ethyl group, a propyl group or an octyl group; a substituted alkyl group such as a 2-phenylethyl group, a 2-phenylpropyl group or a 3,3,3-tolufluoropropyl group; or an aryl group or a substituted aryl group such as a phenyl group or a tolyl group. Of these, methyl groups and ethyl groups are preferable. It is desirable that $R^4$ be a monovalent hydrocarbon group or silyl group for the purpose of improving the storage characteristics of the diorganopolysiloxanes

of this invention.

Examples of B, organic groups that contain carboxyl groups, include groups as indicated by the formula: $-(CH_2)_{10}COOH$, groups as indicated by the formula: $-(CH_2)_2COOCH_3$, groups as indicated by the formula: $-(CH_2)_{10}COOSi(CH_3)_3$ and groups indicated by the formula: $-CH_2CH(CH_3)COOCH_3$.

A is a group that is selected from R. B and D.

The diorganopolysiloxanes of this invention contain one or more, and, preferably, 2 or more organic groups containing epoxy groups and organic groups containing carboxyl groups in 1 molecule. The content of organic groups containing an epoxy group and organic groups containing a carboxyl group should be in the range of 0.1 mol % to 3 mol % of all organic groups bonded to silicon atoms. Thus, x is a positive number, y is 0 or a positive number, z is 0 or a positive number and the value of (x + y - z) should be in the range of 50 to 1,000. When it is less than 50, the hand is inadequate when cloth is treated. When it exceeds 1000. handling characteristics. productivity and emulsification capacity of the composition are decreased. The viscosity of this diorganopolysiloxane at 25°C is 10 to 1,000,000 centistokes, and, preferably, 100 to 10,000 centistokes.

Examples of the diorganopolysilioxanes of this invention include diorganopolysiloxanes as indicated by the formulas below.

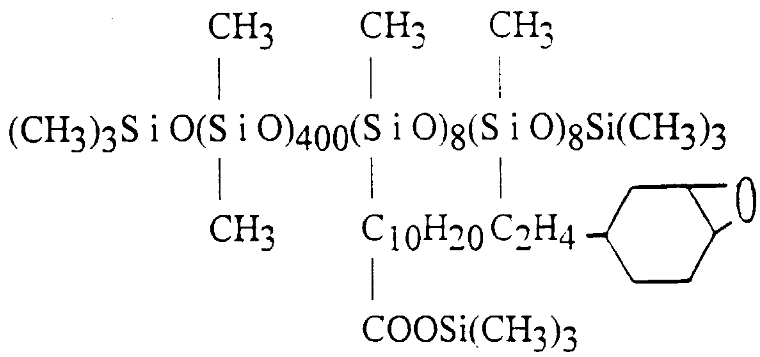

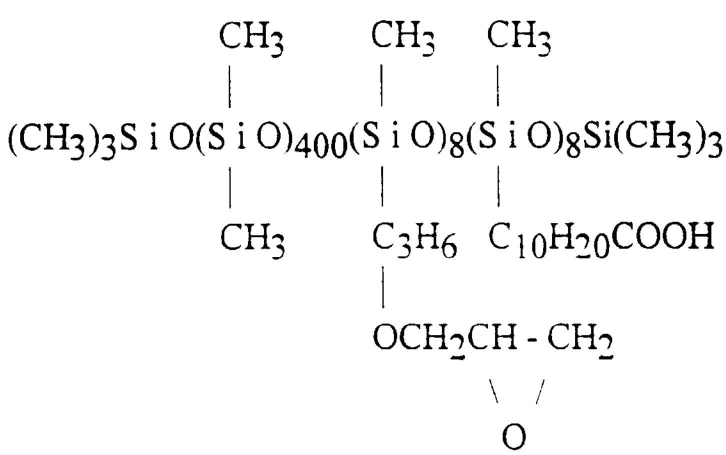

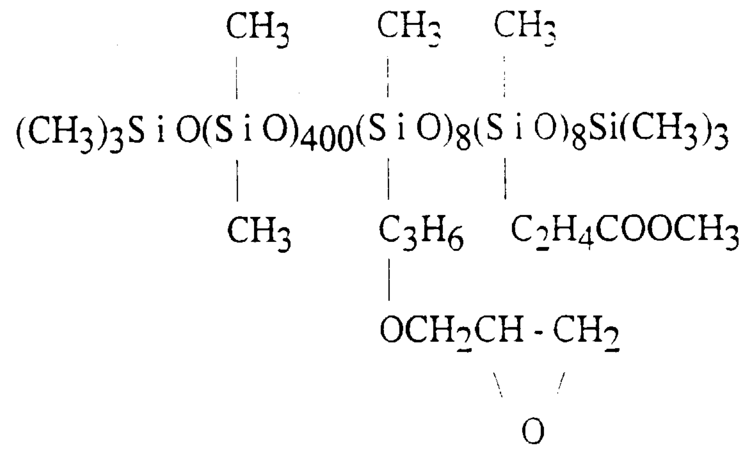

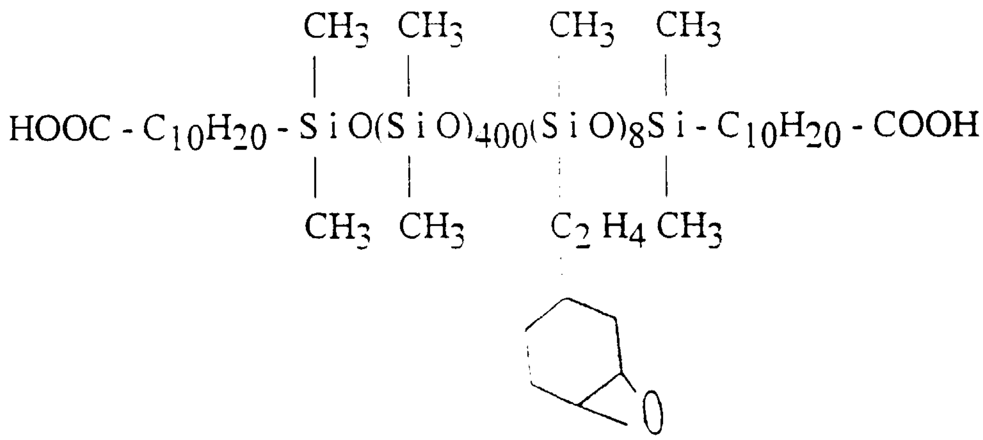

The diorganopolysiloxanes of this invention can be manufactured by simultaneously reacting an organic compound containing an epoxy group as indicated by the formula:

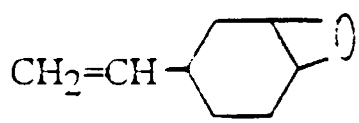

and a compound containing a trimethyl silyl group block carboxyl group as indicated by the formula: $CH_2=CH(CH_2)_8COOSi(CH_3)_3$ with a diorganopolysiloxane having a hydrogen atom bonded with a silicon atom in the side chain as indicated by the formula:
$(CH_3)_3SiO[(CH_3)_2SiO]_x[CH_3HSiO]_wSi(CH_3)_3$ (wherein, x and w are positive numbers) in the presence of 10 to 20 ppm of a catalyst for addition reactions such as chloroplatinic acid. Following the reaction, the trimethylsilyl group is converted to a hydrogen atom by adding a small quantity of alcohol or a mixed solution of an alcohol and water. with a random copolymer as indicated by the formula below being obtained.

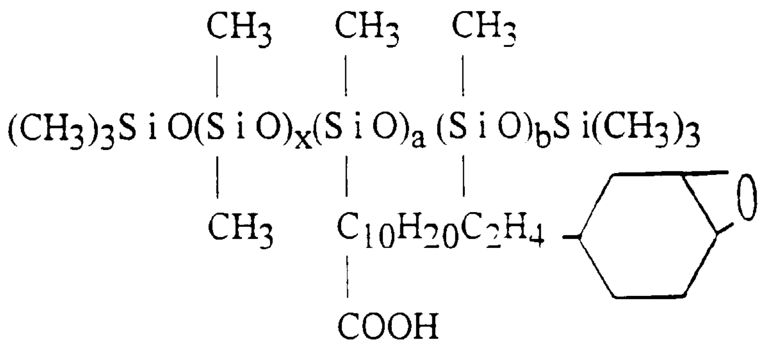

wherein. x is a positive number and (a + b) = w.

They can also be manufactured by compounding tetramethyldisiloxane as indicated by the formula: $H(CH_3)_2SiOSi(CH_3)_2H$, a cyclic octamethyltetrasiloxane as indicated by the formula: $[CH_3)_2SiO]_4$ and a cyclic trimethyl trihydrogen trisiloxane as indicated by the formula: $[CH_3HSiO]_3$, after which a diorganopolysiloxane having a side chain as indicated by the formula: $(CH_3)_2HSiO[(CH_3)_2SiO]_x[CH_3HSiO]_wSi(CH_3)_2H$ (wherein, x and w are positive numbers) and having hydrogen atoms bonded with silicon atoms in both terminals was prepared using a polymerization catalyst for equilibrium reactions such as active kaolin, the organic compound containing an epoxy group and organic compound containing carboxyl group then being reacted in the presence of a catalyst for addition reactions.

In addition to these methods, an organic compound containing a trimethylsilyl group block carboxyl group as indicated by the formula: $CH_2{=}CH(CH_2)_8COOSi(CH_3)_3$ is subjected to an addition reaction with a tetramethyldisiloxane as indicated by the formula: $H(CH_3)_2SiOSi(CH_3)_2H$ to synthesize a siloxane as indicated by the formula: $(CH_3)_3SiOOC(CH_2)_{10}(CH_3)_2SiOSi(CH_3)_2(CH_2)_{10}COOSi(CH_3)_3$, after which the catalyst is removed. Next. a cyclic octamethyl tetrasiloxane as indicated by the formula: $[CH_3)_2SiO]_4$ and a cyclic trimethyltrihydrogen trisiloxane as indicated by $[CH_3HSiO]_3$ were compounded. after which a reaction is performed for 7 to 10 hours at 40 to 60°C using a polymerization catalyst for equilibrium reactions such as active kaolin that has been thoroughly dried. a diorganopolysiloxane as indicated by the formula:

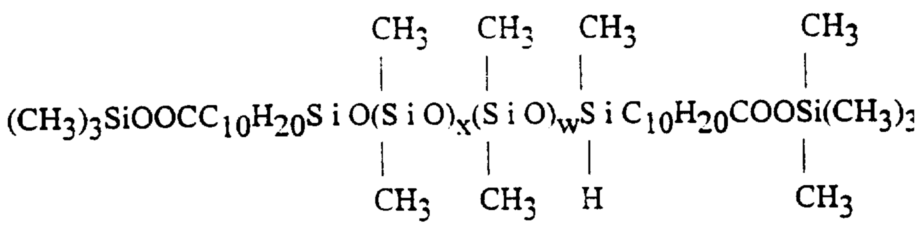

(wherein, x and y are positive numbers) being synthesized. The catalyst is then eliminated by filtration, after which an organic compound that contains an epoxy group as indicated by the formula:

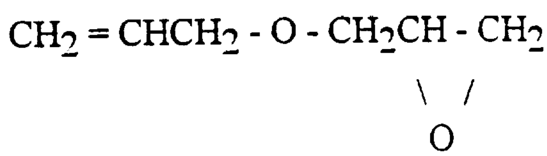

is reacted with this diorganopolysiloxane using a platinum catalyst for addition reactions. Next. a diorganopolysiloxane having an organic group containing carboxyl groups in both terminals and having an organic group containing an epoxy group in the side chain as indicated in the formula below is obtained by adding a small quantity of alcohol or a mixed solution of alcohol and water.

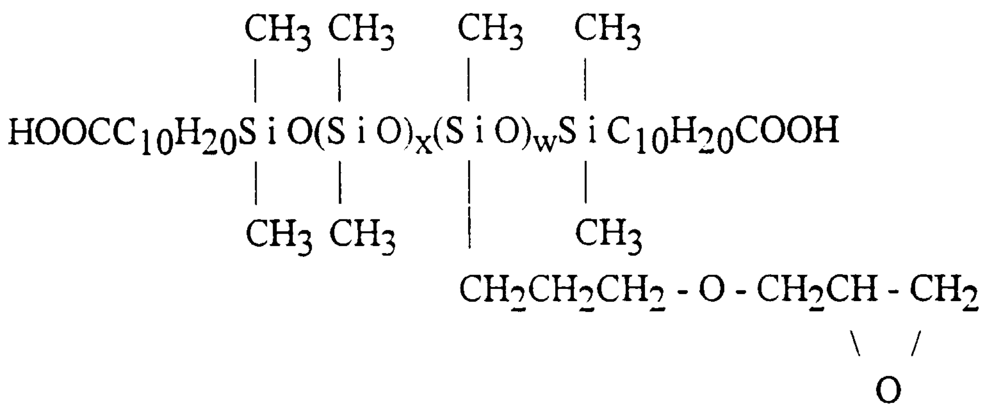

wherein, x and w are positive numbers.

Below there is described the use of the composition of the invention to treat cloth.

The organic group containing an epoxy group and the organic group containing a carboxyl group of the composition of the invention act to improve the resistance to washing and feel of the cloth. The diorganopolysiloxanes can be used alone, in unaltered form, as the treatment agents of this invention. They can be emulsified in water using a nonionic surfactant, a anionic surfactant or both nonionic and anionic surfactants and they can be diluted using aromatic solvents, aliphatic solvents or chlorine solvents such as toluene. xylene. hexane, heptane, perchloroethylene and 1,1,1,-trichloroethane. They can also be used in the form of an emulsion when the organic group containing a carboxyl group in the siloxane is an ester as indicated by the formula: $-R^3COOCH_3$ (wherein, $R^3$ is the same as described above) or when it is blocked by a silyl group as indicated by the formula: $-R^3COOSi(CH_3)_3$ (wherein, R3 is the same as described above). Examples of nonionic surfactants that can be used in emulsification include polyoxyalkylene alkyl ethers, polyoxyalkylene alkylphenyl ethers, polyoxyalkylene alkyl esters. polyoxyalkylene sorbitan alkyl esters, sorbitan alkyl esters, polyethylene glycol and polypropylene glycol. Examples of anionic surfactants include sodium salts. potassium salts and lithium salts of alkyl benzenesulfonic acids such as octylbenzenesulfonic acid and dodecylbenzenesulfonic acid; higher alcohol sulfuric acid esters; polyoxyalkylene alkyl ether sulfuric acid esters. The quantity of these surfactants that is compounded should be within the range of 3 to 20 parts by weight, and, preferably, within the range of 6 to 10 parts by weight, per 100 parts by weight of the diorganopolysiloxane. The quantity of water that is used should be a quantity such that the diorganopolysiloxane is 10 to 60 wt %, and, preferably, 20 to 50 wt % of the emulsion. The emulsion can be manufactured by emulsifying the diorganopolysiloxane by a common method using a kneading machine such as a homomixer, a colloid mill, a line mixer, an homogenizer, a Hubbard mixer, a combination mixer or a vacuum emulsifier.

When the organic group containing a carboxyl group in the siloxane is an ester, or when it is blocked by a silyl group, an acidic substance or an alkaline substance can be added to promote their hydrolysis and cross linking. These components may be added before emulsification or after emulsification of the diorganopolysiloxane. The acidic substance may be formic acid, acetic acid and propionic acid and the alkaline substance may be sodium carbonate, triethanolamine, potassium hydroxide and sodium hydroxide. The quantity in which these substances are added is in the range of 0.1 to 1 parts by weight per 100 parts by weight of the aforementioned diorganopolysiloxane.

A method for treating cloth is to immerse the cloth in the composition of this invention and then squeeze it using a squeezing roller as the quantity of attachment is being controlled. after which it is dried and heat treatment is performed in a drier at 120 to 150°C. The quantity of attachment should be such that the diorganopolysiloxane comes to 0.1 to 3.0 wt %. When the composition of this invention is used in the form of an emulsion, it is usually used dissolved in water.

The term cloth is used in this invention indicates woven fabrics, knit fabrics. nonwoven fabrics and paper comprised of natural fibers, synthetic fibers, semisynthetic fibers, regenerated fibers or inorganic fibers. Natural fibers include hair, wool, silk, hemp, cotton, angora, mohair and asbestos; synthetic fibers include polyester polyamides, polyacrylonitriles, polyvinyl chloride, vinylon polyethylenes, polypropylenes and spandex: semisynthetic fibers include acetate: regenerated fibers include rayon and Bemberg and inorganic fibers include glass fibers, carbon fibers and silicon carbide fibers.

The diorganopolysiloxane of this invention has the advantages that, when it has been used to treat cloth. superior smoothness, softness, elongation recovery capacity, compression recovery capacity, crease resistance and rebound elasticity are conferred on the cloth. Furthermore the feel, or hand of the cloth is improved and shedding of the composition due to washing is greatly reduced. This diorganopolysiloxane may also be used as a resin modifier.

In the examples, parts signifies parts by weight and viscosity is the value at 25°C. The feel of the cloth that had been treated by the treatment agent for cloth and the residual rate (%) of silicone after washing were determined by

the methods described below.

The feel or hand of the cloth that had been treated by the treatment agent for cloth was determined on the basis of the sensation to the hand. Evaluations were made as follows.

5: Extremely good.
4: Good.
3: Fairly good.
2: Fairly poor.
1: Extremely poor.

The Si strength (kcps: kilo count per second) of cloth that had been treated by the treatment agent for cloth was determined with a fluorescence X-ray analyzer [manufactured by Rigaku Kikai Company], after a total of three washing cycles were performed at 40°C using an electric washing machine. with washing for 50 minutes and three rinses being taken as 1 cycle. The detergent used was a 0.5% aqueous solution of a nonphosphorus detergent [brand name, Rabu ], manufactured by Nissan Sekken (Ltd.)]. The cloth that had been washed was hung and dried overnight at room temperature. after which Si strength was determined as described above and the silicone residual rate (%) after washing was calculated by the following formula.

$$\text{Silicone residual rate (\%)} = \frac{(\text{Si strength after washing})}{\text{Si strength before washing})} \times 100$$

Example 1:

94.1 parts of octamethyl tetracyclosiloxane, 3.4 parts of methylhydrodgen polysiloxane as indicated by the formula: $(CH_3)_3SiO(CH_3HSiO)_{40}Si(CH_3)_3$ and 2.5 parts of dimethyl polysiloxane of a viscosity of 10 centistokes were compounded, 2.0 parts of active kaolin that had been sufficiently dried was added, a reaction was carried out for 7 hours at 60 to 70°C and diorganopolysiloxane as indicated by the formula: $(CH_3)_3SiO\{(CH_3)_2SiO\}_{400}(CH_3HSiO)_{16}Si(CH_3)_3$ was obtained. Next, this product was filtered. Next, 3.5 parts of an organic compound containing an epoxy group as indicated by the formula:

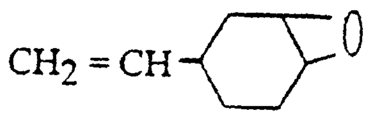

6.0 parts of an organic compound containing a carboxyl group as indicated by the formula: $CH_2=CH(CH_2)_8COOSi(CH_3)_3$ and 20 ppm of chloroplatinic acid were added to 90.5 parts of the diorganopolysiloxane that had been filtered and a reaction was carried out for 2 hours at 80°C. The reaction product that was obtained in this way was analyzed by Fourier transform spectroscopy (hereafter. FT-IR) and $^1$H-nuclear magnetic resonance analysis (hereafter. $^1$H-NMR). The following results were obtained by $^1$H-NMR.

Table 1

δ (ppm):

0.1 ($Si-CH_3$)

0.3 ($-COOSi(CH_3)_3$)

0.5 ($Si-CH_2-$)

1.3 ~ 1.6 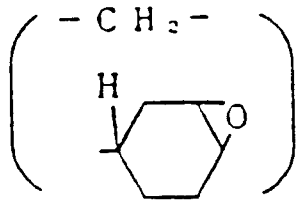

2.1 ($C-CH_2COOR$)

3.1 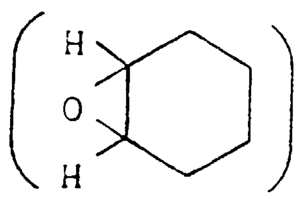

The following results were obtained by FT-IR.

| | |
|---|---|
| 1700 $cm^{-1}$ | (C=O) |
| 2950 $cm^{-1}$ | (C-H) |
| 1250 $cm^{-1}$ | ($Si-CH_3$) |
| 1100 $cm^{-1}$ | (Si-O-Si) |
| 800 $cm^{-1}$ | ($Si-CH_3$) |

It was confirmed that this substance was diorganopolysiloxane (A) as indicated by the following formula:

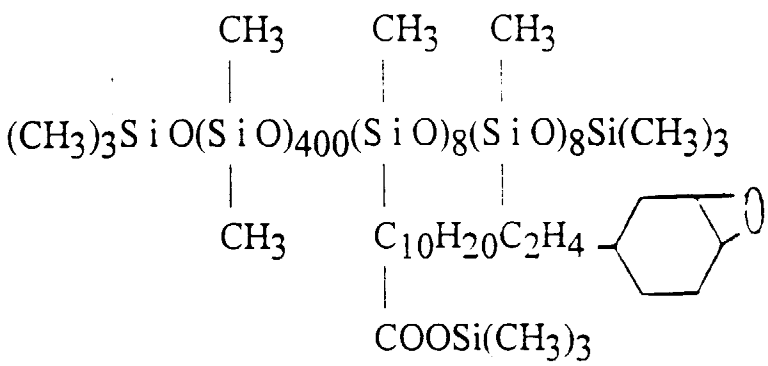

The viscosity of this diorganopolysiloxane (A) was 4.520 centistokes.

Example 2:

94.1 parts of octamethyl tetracyclosiloxane, 3.4 parts of methylhydrogen polysiloxane as indicated by the formula: $(CH_3)_3SiO(CH_3HSiO)_{40}Si(CH_3)_3$ and 2.5 parts of dimethyl polysiloxane of a viscosity of 10 centistokes were compounded. 2.0 parts of active kaolin that had been sufficiently dried was added. a reaction was carried out for 7 hours at 60 to 70°C and diorganopolysiloxane as indicated by the formula: $(CH_3)_3SiO\{(CH_3)_2SiO\}_{400}(CH_3HSiO)_{16}Si(CH_3)_3$ was obtained. Next, this product was filtered. Next, 3.2 parts of an organic compound containing an epoxy group as indicated by the formula:

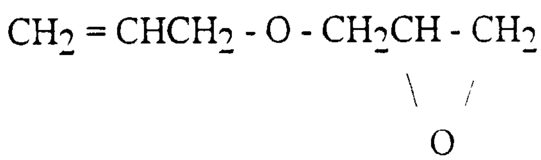

6.1 parts of an organic compound containing a carboxyl group as indicated by the formula: $CH_2{=}CH(CH_2)_8COOSi(CH_3)_3$ and 20 ppm of chloroplatinic acid were added to 90.7 parts of the diorganopolysiloxane that had been filtered and a reaction was carried out for 2 hours at 80°C, after which 3.0 parts of methanol was added. The reaction product that was obtained in this way was analyzed by FT-IR and $^1$H-NMR. The following resuits were obtained by $^1$H-NMR.

Table 2

δ (ppm):

| | |
|---|---|
| 0.1 | ($Si-CH_3$) |
| 0.5 | ($Si-CH_2-$) |
| 1.3 ~ 1.6 | (- CH2 -) |
| 2.3 | ($C-CH_2COOR$) |
| 2.6 | 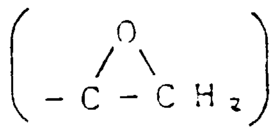 |
| 3.1 | 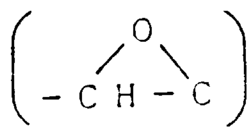 |
| 3.4 | ($-CH_2-O-CH_2-$) |

The following results were obtained by FT-IR.

| | |
|---|---|
| 1700 $cm^{-1}$ | (C=O) |
| 3500 $cm^{-1}$ | (OH) |
| 2950 $cm^{-1}$ | (C-H) |
| 1250 $cm^{-1}$ | ($Si-CH_3$) |
| 1100 $cm^{-1}$ | (Si-O-Si) |
| 800 $cm^{-1}$ | ($Si-CH_3$) |

It was confirmed that this substance was diorganopolysiloxane (B) as indicated by the following formula:

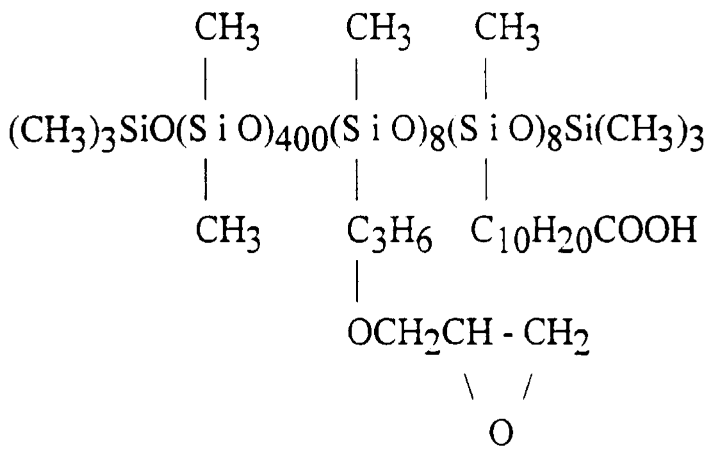

The viscosity of this diorganopolysiloxane (B) was 5,020 centistokes.

Example 3:

94.1 parts of octamethyl tetracyclosiloxane, 3,4 parts of methylhydrogen polysiloxane as indicated by the formula: $(CH_3)_3SiO(CH_3HSiO)_{40}Si(CH_3)_3$ and 2.5 parts of dimethyl polysiloxane of a viscosity of 10 centistokes were compounded, 2.0 parts of active kaolin that had been sufficiently dried was added a reaction was carried out for 7 hours at 60 to 70°C and diorganopolysiloxane as indicated by the formula: $(CH_3)_3SiO\{(CH_3)_2SiO\}_{400}$ $(CH_3HSiO)_{16}Si(CH_3)_3$ was obtained. Next. this product was filtered. Next. 3.4 parts of an organic compound containing an epoxy group as indicated by the formula:

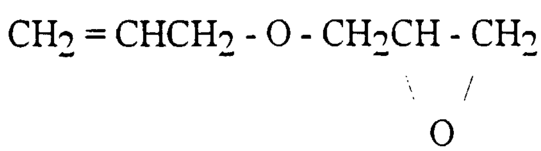

2.1 parts of an organic compound containing a carboxyl group as indicated by the formula: $CH_2$=$CHCOOCH_3$ and 20 ppm of chloroplatinic acid were added to 94.5 parts of the diorganopolysiloxane that had been filtered and a reaction was carried out for 2 hours at 80°C. The reaction product that was obtained in this way was analyzed by FT-IR and $^1$H-NMR. The following results were obtained by $^1$H-NMR.

Table 3

δ (ppm):

| | |
|---|---|
| 0.1 | (Si-$CH_3$) |
| 0.5 | (Si-$CH_2$-) |
| 1.5 | (-$CH_2$-) |
| 2.0 | (-$CH_2$COOR) |
| 2.6 | 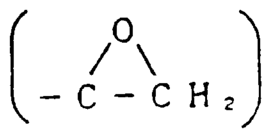 |
| 3.1 | 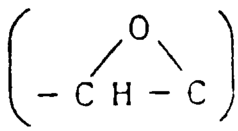 |
| 3.4 | (-$CH_2$-O-$CH_2$-) |
| 3.6 | (-$COOCH_3$) |

The following results were obtained by FT-IR.

| | |
|---|---|
| 1700 $cm^{-1}$ | (C=O) |
| 2950 $cm^{-1}$ | (C-H) |
| 1250 $cm^{-1}$ | (Si-$CH_3$) |
| 1100 $cm^{-1}$ | (Si-O-Si) |
| 800 $cm^{-1}$ | (Si-$CH_3$) |

It was confirmed that this substance was diorganopolysiloxane (C) as indicated by the following formula

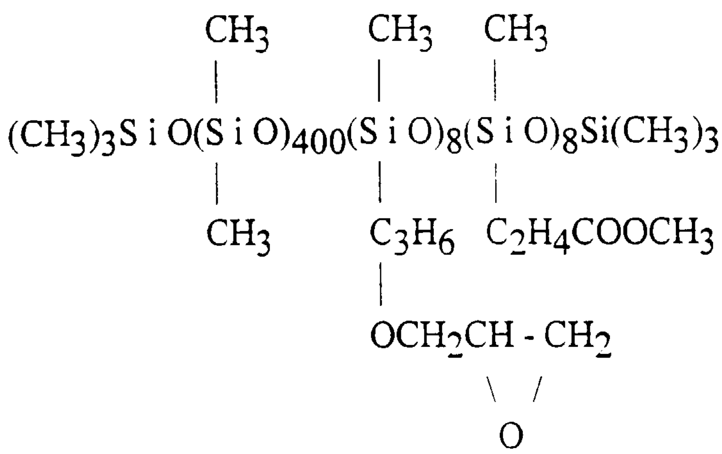

The viscosity of this diorganopolysiloxane (C) was 3.738 centistokes.

Example 4:

66 parts of an organic compound containing a carboxyl group as indicated by the formula: $CH_2=CH(CH_2)_8COOSi(CH_3)_3$ and 20 ppm of chloroplatinic acid were added to 34 parts of tetramethyl disiloxane and a reaction was carried out, after which the catalyst was removed and a diorganopolysiloxane as indicated by the formula: $(CH_3)_3SiOOC(CH_2)_{10}(CH_3)_2SiOSi(CH_3)_2(CH2)_{10}COOSi(CH_3)_3$ was obtained. 96.3 parts of octamethyl tetracyclosiloxane, 1.6 parts of trimethyl trihydrogen tricyclosiloxane and 2.0 parts of active kaolin that had been sufficiently dried were compounded with 2.1 parts of the diorganopolysiloxane that was obtained. a reaction was carried out for 7 hours at 60 to 70°C and a diorganopolysiloxane as indicated by the formula: $(CH_3)_3SiOOC(CH_2)_{10}(CH_3)_2SiO\{(CH_3)_2SiO\}_{400}(CH_3HSiO)_8Si(CH_3)_2(CH_2)_{10}COOSi(CH_3)_3$ was obtained. Next, this product was filtered and the active kaolin was eliminated. the active kaolin was eliminated. 3.2 parts of an organic compound containing an epoxy group as indicated by the formula:

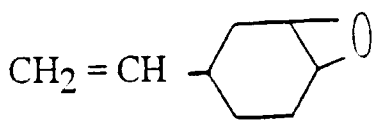

and 20 ppm of chloroplatinic acid were added to 96.8 parts of the diorganopolysiloxane that had been filtered and a reaction was carried out for 2 hours at 80°C, after which 0.6 parts of methanol was added. The reaction product that was obtained in this way was analyzed by FT-IR and $^1H$-NMR. The following results were obtained by $^1H$-NMR.

Table 4

δ (ppm):

0.1 (Si-$CH_3$)

0.5 (Si-$CH_2$-)

1.3 ~ 1.6 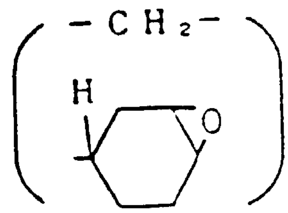

2.3 (-$CH_2$COOR)

3.1 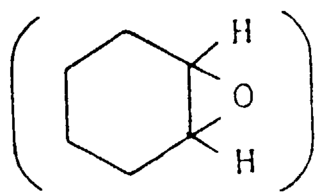

The following results were obtained by FT-IR.

$1700\ cm^{-1}$ (C=O)

$3500\ cm^{-1}$ (O-H)

$2950\ cm^{-1}$ (C-H)

$1250\ cm^{-1}$ (Si-$CH_3$)

$1100\ cm^{-1}$ (Si-O-Si)

$800\ cm^{-1}$ (Si-$CH_3$)

It was confirmed that this substance was diorganopolysiloxane (D) as indicated by the following formula

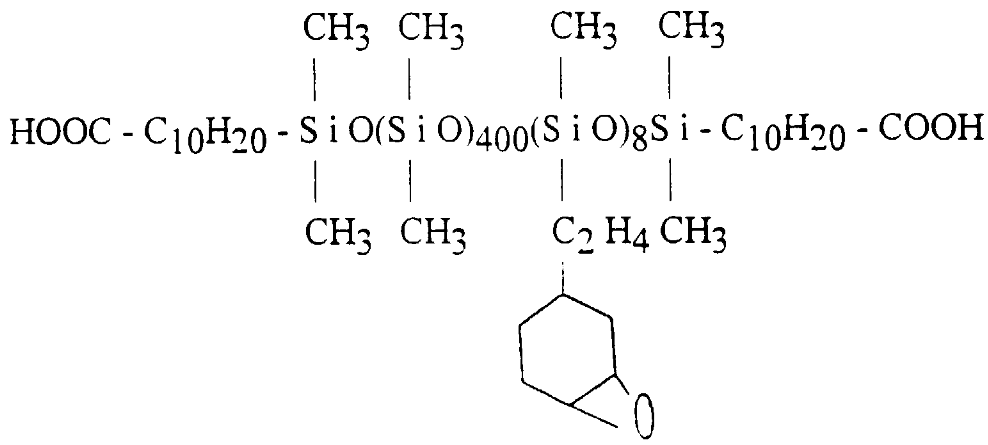

The viscosity of this diorganopolysiloxane (D) was 4.980 centistokes.

Example 5:

Amounts of 1 g each of the diorganopolysiloxanes (A) through (D) synthesized in Examples 1 through 4 were introduced into 500 cc beakers and cloth treatment agents were prepared by dissolving each of them in 199 g of a mixed solvent of toluene and ethanol ( the mixture ratio of toluene and ethanol being a weight ratio of 5 : 1). Next, a 25 cm x 25 cm knit fabric of 100% cotton (brand name: Inter Lock Knit. manufactured by Test Fabrics. Inc.. of the United States) was immersed in this treatment solution. after which the fabric was squeezed at a squeezing rate of 100% using a squeezing roller (the quantity of attachment of each diorganopolysiloxane being 0.5 wt %) and was then allowed to stand overnight at 25°C. After it had been allowed to stand. it was hung in a hot air dryer at 150°C and was subjected to heat treatment for 3 minutes. The feel of the knit fabric that had been treated in this way and residual rate (%) of silicone following washing were determined. The feel of the knit fabric after washing was also determined. These results are shown in Table 5. On the basis of these results, it was ascertained that the cloth treatment agent of this invention brought about a great improvement in the feel of the knit fabric, that it lessened deterioration in feel because of a decrease in shedding of silicone after washing and that it was extremely good as an agent for improving the feel of cloth.

Comparative Example 1:

Cloth treatment agents were prepared in the same way as in Example 5 except that, instead of the diorganopolysiloxanes (A) through (D) in Example 5. dimethyl polysiloxane (E) of a viscosity of 4,000 centistokes as indicated by the formula:

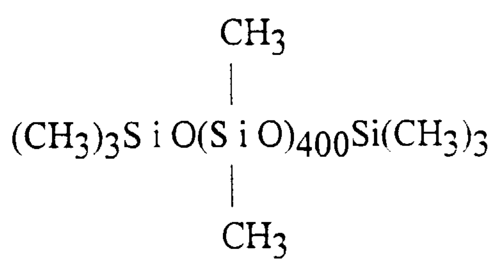

diorganopolysiloxane (F) containing a carboxyl group of a viscosity of 2.700 centistokes as indicated by the formula:

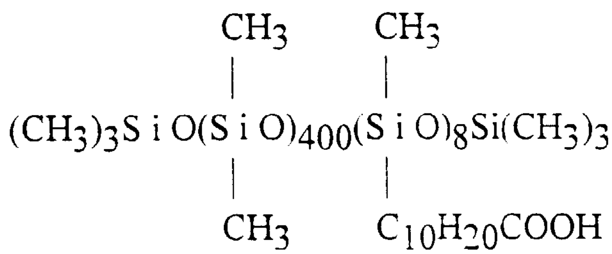

diorganopolysiloxane (G) containing an epoxy group of a viscosity of 3,235 centistokes as indicated by the formula:

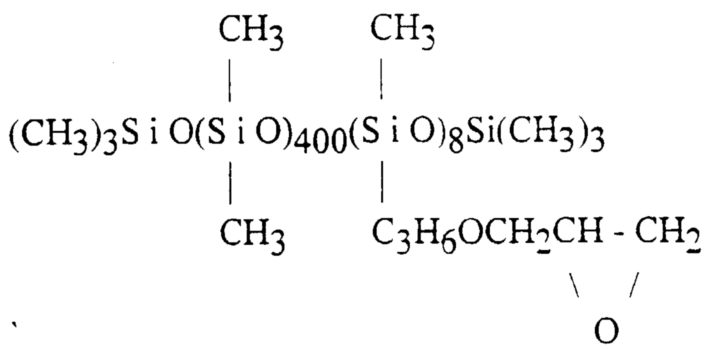

and a 1 : 1 mixture of the diorganopolysiloxanes (F) and (G) were used. Knit fabric was treated in the same way as in Example 5 using the treatment agents that were obtained and determinations were made of feel before and after washing and of the residual silicone rate (%) following washing. The results are shown in Table 5.

<u>Table 5</u>

| | Example 5 | | | | Comparative Example 1 | | | | |
|---|---|---|---|---|---|---|---|---|---|
| Diorganopolysiloxane | (A) | (B) | (C) | (D) | (E) | (F) | (G) | (F) + (G) | Untreated |
| Feel<br>Before washing<br>After washing | <br>4~ 5<br>4 | <br>5<br>4 ~ 5 | <br>4 ~ 5<br>4 | <br>4 ~ 5<br>4 ~ 5 | <br>1 ~ 2<br>1 ~ 2 | <br>3 ~ 4<br>2 ~ 3 | <br>3 ~ 4<br>2 ~ 3 | <br>3 ~ 4<br>3 | <br>1<br>1 |
| Residual silicone rate after washing (%) | 73.3 | 75.2 | 68.5 | 76.2 | 16.2 | 29.2 | 40.7 | 45.2 | - |
| Overall evaluation as cloth treatment agent | Extremely good | Extremely good | Extremely good | Extremely good | Poor | Unsatisfactory | Unsatisfactory | Somewhat unsatisfactory | - |

Example 6:

Thirty-five parts of a mixture of three types of nonionic surfactants (in a mixture ratio of weight ratios of 1: 1: 1) as indicated by formula: $C_{13}H_{27}O\ (C_2H_4O)_5H$, formula: $C_{13}H_{27}O\ (C_2H_4O)_{12}H$, formula: $C_{13}H_{27}O\ (C_2R_4O)_{21}H$, and 565 parts of water were added to amounts of 400 parts of the diorganopolysiloxanes (A) through (D) synthesized in Examples 1 through 4, after which the mixture was emulsified using a combination mixer (rotation rate, 2,000 rpm) and an emulsion type cloth treatment agent being prepared. 140 parts of water was added to 20 parts of the cloth treatment agent that was obtained in this way and an emulsion of a siloxane concentration of 0.5 wt % was prepared. A knit fabric was treated in the same way as in Example 5 using this emulsion. The feel before and after washing of the knit fabric that had been treated in this way and residual rate (%) of silicone following washing were determined. These results are shown in Table 6. On the basis of these results, it was ascertained that the cloth treatment agent of this invention brought about decreases in shedding of the silicone after washing with little deterioration in feel even when it was used in the state of an emulsion and that it was extremely good as an agent for improving the feel of cloth.

Comparative Example 2:

Emulsion type cloth treatment agents were prepared in the same way as in Example 6 except that the mixtures of diorganopolysiloxanes (E) through (G) and the mixtures of (F) and (G) used in Comparative Example 1 were used instead of the diorganopolysiloxanes (A) through (D) in Example 6. 140 parts of water was added to 20 parts of this cloth treatment agent to make an emulsion having a siloxane concentration of 0.5 wt % and the knit fabric was treated using it in the same way as in Example 5. The feel before and after washing of the knit fabric that was obtained and the residual rate (%) of silicone following washing were determined. These results are shown in Table 6.

## Table 6

| Diorganopolysiloxane | Example 6 | | | | Comparative Example 2 | | | |
|---|---|---|---|---|---|---|---|---|
| | (A) | (B) | (C) | (D) | (E) | (F) | (G) | (F) + (G) |
| Feel | | | | | | | | |
| Before washing | 4 ~ 5 | 4 ~ 5 | 4 ~ 5 | 4 ~ 5 | 1 ~ 2 | 3 | 3 | 3 |
| After washing | 4 | 4 | 4 | 4 | 1 ~ 2 | 2 ~ 3 | 2 ~ 3 | 2 ~ 3 |
| Residual silicone rate after washing (%) | 68.8 | 66.3 | 65.5 | 69.0 | 13.3 | 25.8 | 33.1 | 41.3 |
| Overall evaluation as cloth treatment agent | Extremely good | Extremely good | Extremely good | Extremely good | Poor | Unsatisfactory | Unsatisfactory | Unsatisfactory |

Example 7:

40 parts of polyoxyethylene (6 moles) lauryl ether type nonionic surfactant, 5 parts of polyoxyethylene (4.5 moles) lauryl ether sodium sulfate type anionic surfactant and 55 parts of water were added to and mixed with 300 parts of diorganopolysiloxane (A) that was synthesized in Example 1, after which emulsification was performed using a colloid mill. Next, 600 parts of water were added and an emulsion type cloth treatment agent having a siloxane concentration of 30 wt % was obtained. When the cloth treatment agent that was obtained was allowed to stand at room temperature for 3 months. it was extremely stable, with no separation being seen. 600 parts of water was added to 20 parts of this cloth treatment agent to make an emulsion having a siloxane concentration of 1 wt %. A 100% polyester woven fabric for yarn processing of 30 cm x 30 cm in size (women's clothing fabric of a denier of 75 and a single yarn count of 24) was immersed in this emulsion. After immersion, it was squeezed to a squeezing rate of 100% using a mangle roller and the fabric was hung and dried overnight at room temperature. Next, a heat treatment was performed for 5 minutes

at 150°C and the fabric was cooled to room temperature, after which its feel was determined by touch. The woven fabric that was obtained was of superior smoothness and rebound elasticity, there was little occurrence of creases even when it was gripped forcibly and its feel was greatly improved.

## Claims

1. A composition comprising a diorganopolysiloxane which has one or more organic groups containing epoxy groups and organic groups containing carboxyl groups in one molecule and which has a viscosity at 25°C of 10 to 1,000,000 centistokes, the diorganopolysiloxane having the general formula:

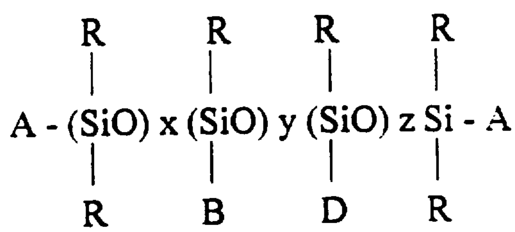

wherein:

R is a monovalent hydrocarbon group which R groups may be the same or different:
B is an organic group containing an epoxy group selected from :

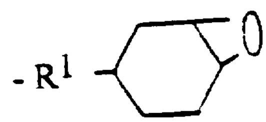

wherein, $R^1$ is a diavalent hydrocarbon group and

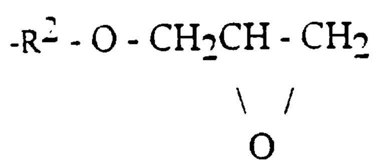

wherein, $R^2$ is a divalent hydrocarbon group;
D is an organic group containing a carboxyl group represented by the formula:
$-R^3-COOR^4$ , wherein, $R^3$ is a divalent hydrocarbon group and $R^4$ is selected from hydrogen, monovalent hydrocarbon groups and the $-SiR_3$ groups, wherein, R is as previously defined;
A is a group selected from groups as represented by R, B and D, and
x is a positive number, y is 0 or a positive number and z is 0 or a positive number.

2. A composition in accordance with Claim 1 further comprising a solvent selected from aromatic solvents. aliphatic solvents and chlorine solvents.

3. A composition in accordance with Claim 1, wherein said organic group represented by D is selected from esters and silyl end-blocked groups, said composition further comprising:

3-20 parts, by weight, per 100 parts of said diorganopolysiloxane of a surfactant selected from nonionic and anionic surfactants:
about 66 to 900 parts. by weight. per 100 parts of said diorganopolysiloxane of water: and
said composition being in the form of an emulsion.

**4.** A method of treating cloth comprising the steps of (I) immersing said cloth in the composition of Claim 1:

(II) squeezing said cloth to remove said diorganopolysiloxane therefrom to such an extent that a predetermined quantity thereof for attachment to said cloth remains in said cloth; and

(III) heating and drying said immersed and squeezed cloth at a temperature between about 120°C and 150°C.

**5.** A method of treating cloth comprising the steps of (I) immersing said cloth in the composition of Claim 2;

(II) squeezing said cloth to remove said diorganopolysiloxane therefrom to such an extent that a predetermined quantity thereof for attachment to said cloth remains in said cloth: and

(III) heating and drying said immersed and squeezed cloth at a temperature between about 120°C and 150°C.

**6.** A method of treating cloth comprising the steps of (I) immersing said cloth in the composition of Claim 3;

(II) squeezing said cloth to remove said diorganopolysiloxane therefrom to such an extent that a predetermined quantity thereof for attachment to said cloth remains in said cloth: and

(III) heating and drying said immersed and squeezed cloth at a temperature between about 120°C and 150°C.